# EUROPÄISCHE PATENTANMELDUNG

(11) **EP 2 295 861 A1**
(43) Veröffentlichungstag der Anmeldung: **16.03.2011**
(21) Anmeldenummer: 09168654.3
(22) Anmeldetag: 26.08.2009
(51) Int. Cl.: F23D 17/00, F23R 3/36, F02C 7/22

(54) **Brenner, insbesondere für Gasturbinen**

(71) Anmelder: SIEMENS AKTIENGESELLSCHAFT, 80333 München (DE)
(72) Erfinder: Böttcher, Andreas, 40882 Ratingen (DE); Cano Wolff, Mariano, 40882 Ratingen (DE); Krieger, Tobias, 47226 Duisburg (DE); Vogtmann, Daniel, 40789 Monheim (DE); Wörz, Ulrich, 45481 Mülheim Ruhr (DE)

(57) **Zusammenfassung**

Die Erfindung betrifft einen Brenner mit einer zentralen Brennstoffzufuhranordnung (27), einem die zentrale Brennstoffzufuhranordnung (27) umgebenden Ringluftkanal (17) zur Zufuhr von Verbrennungsluft und in dem Ringluftkanal (17) angeordneten Drallschaufeln (19), welche erste Gasdüsen (21) zum Eindüsen eines gasförmigen Brennstoffes in die Verbrennungsluft und zweite Gasdüsen (23) zum Eindüsen eines gasförmigen Brennstoffes in die Verbrennungsluft aufweisen, wobei die ersten Gasdüsen (21) von einem ersten Gasverteilerkanal (29) in der Brennstoffzufuhranordnung (27) gespeist werden und die zweiten Gasdüsen (23) von einem zweiten Gasverteilerkanal (31) in der Brennstoffzufuhranordnung (27) gespeist werden, und wobei ein erster Gaszufuhrkanal (35) und ein zweiter Gaszufuhrkanal (37) zur Versorgung mit Brenngas vorhanden ist, wobei der erste Gaszufuhrkanal (35) mit dem ersten Gasverteilerkanal (29) verbunden ist und der zweite Gaszufuhrkanal (37) mit dem zweiten Gasverteilerkanal (31) verbunden ist wobei mindestens einer der Gaszufuhrkanäle (35,37) elastisch ausgeführt ist. Weiterhin betrifft die Erfindung eine Gasturbine mit einem solchen Brenner.

## Beschreibung

Die vorliegende Erfindung betrifft einen Brenner und insbesondere einen Gasturbinenbrenner mit einer zentralen Brennstoffzufuhranordnung. Daneben betrifft die Erfindung eine Gasturbine.

Im Hinblick auf die weltweiten Bemühungen zur Senkung des Schadstoffausstoßes von Befeuerungsanlagen, insbesondere bei Gasturbinen, wurden in den letzten Jahren Brenner entwickelt, die besonders geringe Ausstöße an Stickoxiden (NOx) aufweisen. Dabei wird vielfach Wert darauf gelegt, dass solche Brenner jeweils nicht nur mit einem Brennstoff, sondern möglichst mit verschiedenen Brennstoffen, beispielsweise Öl und Erdgas wahlweise oder in Kombination betreibbar sind, um die Versorgungssicherheit und Flexibilität des Betriebs zu erhöhen. Solche Brenner sind beispielsweise in der EP 0 276 696 B1 beschrieben.

Der in EP 0 276 696 B1 beschriebene Brenner ist ein Hybridbrenner für Vormischbetrieb mit Gas und/oder Öl, wie er insbesondere für Gasturbinenanlagen angewendet wird. Der Brenner umfasst eine zentrale Brennstoffzufuhranordnung, in die auch ein Pilotbrennersystem integriert ist, welches mit Gas und/oder Öl als ein sogenannter Diffusionsbrenner oder als gesonderter Vormischbrenner betreibbar ist. Zusätzlich ist die Möglichkeit zur Einspeisung von Inertstoffen vorgesehen. Die zentrale Brennstoffzufuhranordnung ist von einem Hauptbrennersystem umgeben, welches ein Luftzufuhr-Ringkanalsystem mit einer darin befindlichen Drallbeschaufelung mit einer Mehrzahl von Schaufeln und stromauf von den Schaufeln angeordneten Düsenrohren für den Vormischbetrieb mit Gas aufweist. Zusätzlich sind in der Brennstoffzufuhranordnung Einlassdüsen für Öl im Bereich der Drallbeschaufelung vorhanden, die eine Vormischung des Hauptluftstroms mit Öl ermöglichen. Statt wie in EP 0 276 696 B1 mittels stromauf von den Drallschaufeln gelegener Düsenrohre kann das Brenngas auch durch in den Drallschaufeln selbst angeordnete Düsenöffnungen in den Luftkanal eingedüst werden, wie dies beispielsweise in EP 0 580 683 B1 beschrieben ist.

Um die Kontrolle der Emissionen und der Verbrennungsstabilität zukünftig noch zu erhöhen, soll zusätzlich zu einer Gaseindüsung durch die Schaufel wie in EP 0 580 683 B1 eine weitere Gaseindüsung durch die Schaufel genutzt werden. Diese zusätzliche Gaseindüsung soll separat von der Hauptgasstufe regelbar sein, d.h. es muss zusätzlich zu den bisher bestehenden Gas- und Ölkanälen ein zusätzlicher, zweiter Gaskanal in die zentrale Brennstoffzuführeinrichtung des Brenners eingebracht werden. Eine Schwierigkeit besteht nun darin, diesen zusätzlichen Gaskanal mit Brennstoff zu versorgen, ohne dass dabei das bisherige Brennerdesign aerodynamisch verändert wird. Dies gilt vor allem für die Außenkontur der zentralen Brennstoffzufuhranordnung bzw. der Drallschaufeln, welche den Strömungskanal für die zugeführte Verbrennungsluft bilden.

Aufgabe der vorliegenden Erfindung ist es daher, einen Brenner, insbesondere einen Gasturbinenbrenner, zur Verfügung zu stellen, der die Zufuhr von Brenngas zu einem zweiten Gaskanal ermöglicht, ohne dass die Außenkontur der zentralen Brennstoffzufuhranordnung wesentlich verändert wird.

Es ist eine zweite Aufgabe der vorliegenden Erfindung, eine vorteilhafte Gasturbine zur Verfügung zu stellen.

Die erste Aufgabe wird durch einen Brenner nach Anspruch 1 gelöst, die zweite Aufgabe durch eine Gasturbine nach Anspruch 11. Die abhängigen Ansprüche enthalten vorteilhafte Ausgestaltungen der Erfindung.

Dabei weist ein Brenner eine zentrale Brennstoffzufuhranordnung und einen die zentrale Brennstoffzufuhranordnung umgebenden Ringluftkanal zur Zufuhr von Verbrennungsluft auf. In dem Ringluftkanal sind Drallschaufeln angeordnet, welche erste Gasdüsen zum Eindüsen eines gasförmigen Brennstoffes in die Verbrennungsluft und zweite Gasdüsen zum Eindüsen eines gasförmigen Brennstoffes in die Verbrennungsluft aufweisen. Dabei werden die ersten Gasdüsen von einem ersten Gasverteilerkanal in der Brennstoffzufuhranordnung gespeist und die zweiten Gasdüsen von einem zweiten Gasverteilerkanal in der Brennstoffzufuhranordnung gespeist. Weiterhin sind ein erster Gaszufuhrkanal und ein zweiter Gaszufuhrkanal zur Versorgung mit Brenngas vorhanden, wobei der erste Gaszufuhrkanal mit dem ersten Gasverteilerkanal und der zweite Gaszufuhrkanal mit dem zweiten Gasverteilerkanal verbunden sind.

Um eine zusätzliche zweite Gaszufuhr zu bewerkstelligen ist ein zusätzlicher Gaszufuhrkanal notwendig.

Erfindungsgemäß wurde hier erkannt, dass z.B. zwei parallele Gaszufuhrkanäle, insbesondere Gaszufuhrrohre, durch die Veränderung in der Nabenaußenkontur, welche durch das zusätzliche Gaszufuhrrohr notwendig ist, negative Einflüsse auf das Strömungsverhalten aufweisen. Dies resultiert draus, dass eine Doppeleinspannung der Gaszufuhrkanäle vorliegt, und daraus sehr hohe Spannungen entstehen und somit die geforderte Lebensdauer nicht erreicht werden kann.

Dieses Problem wird mithilfe der Erfindung nun gelöst. Erfindungsgemäß ist nun mindestens einer der Gaszufuhrkanäle elastisch ausgeführt. Die Ausführung eines elastischen Gaszufuhrkanals hat dabei den Vorteil, dass die Aerodynamik des Brenners im Hinblick auf die in die anderen Luftzufuhrkanäle einströmenden Luft im Vergleich zu einem Brenner mit lediglich einem einzigen Gaszufuhrkanal und einem einzigen Satz Gasdüsen nicht verändert wird. Somit kann eine "Zwei Gasstufen Brennerkonstruktion" ohne negative Einflüsse auf die Luftströmung konstruiert werden, da keine äußere Veränderung der Brennstoffzufuhranordnung vorgenommen werden muss. Auch wirkt sich diese "Zwei Gasstufen Brennerkonstruktion" nicht negativ auf die Lebensdauer aus, da unnötige Spannungen z.B. durch Doppeleinspannung des zweiten Gaszufuhrkanals vermieden werden. Durch die elastische Ausführung mindestens einer der Gaszufuhrkanäle können thermische Dehnungen besonders gut ausglichen werden.

Bevorzugt ist der mindestens eine Gaszufuhrkanal aus einem elastischen Werkstoff gefertigt, um die Elastizität herzustellen. Dieser kann beispielsweise einen hochtemperaturfesten Kunststoff umfassen oder aus Metall oder eine Metalllegierung, z.B. Gusswerkstoffe und/oder eine Keramikverbindung sein.

Bevorzugt ist ein Pilotbrenner vorhanden. Dieser kann zentral in der Brennstoffzufuhranordnung angeordnet sein.

In bevorzugter Ausgestaltung weist der mindestens eine Gaszufuhrkanal mindestens eine Dehnschleife auf, um die Elastizität herzustellen. Somit können thermische Dehnungen besonders gut ausgeglichen werden und gleichzeitig erlaubt die mindestens eine Dehnschleife eine besonders robuste Konstruktion der gesamten Brennstoffzufuhranordnung. Die zweite Gasstufe, bzw. der zweite Gaszufuhrkanal lässt sich somit leicht und ohne großen Aufwand in das vorhandene Design integrieren. Somit ist auch nachträglich eine Ausgestaltung der bereits gefertigen Brenner mit dem erfindungsgemäßen Gaszufuhrkanal möglich.

Bevorzugt ist die mindestens eine Dehnschleife um den Pilotbrenner angeordnet.

Bevorzugt weist der Brenner im Betrieb eine Brennstoff Strömungsrichtung auf. Weiterhin ist ein Brennerträger vorhanden. Die Gaszufuhrkanäle sind stromaufwärts heißgasseitig mit dem Brennerträger verbunden. Diese Verbindung kann z.B. durch Anschlüsse an einem jeweiligen Brennerträgerflansch erfolgen. Dadurch wird eine einfache Montage ermöglicht. Weiterhin sind die Gaszufuhrkanäle stromabwärts mit einer Drallschaufel verbunden.

Bevorzugt werden die ersten Düsen von einem ersten Verteilerrohr der Drallschaufel gespeist und die zweiten Düsen von einem zweiten Verteilerrohr, wobei das Verteilerrohr in der Drallschaufel integriert ist, und wobei die Drallschaufel zwischen den ersten Verteilerrohr und zweiten Verteilerrohr geteilt in zwei Schaufelhälften ausgeführt ist. Dies hat den Vorteil, dass die Schaufel bzw. die beiden Schaufelhälften jetzt in ihrer Ausrichtung wieder separat über sogenannte Einstellscheiben eingestellt werden können. Zusätzlich ist eine separate Brennstoffsteuerung über beide unabhängigen Verteilerrohre möglich. Auch ist die geteilte Schaufel einfach und kostengünstiger herzustellen.

In bevorzugter Ausgestaltung weist die Brennstoffzufuhranordnung ein weiteres Brennstoffzufuhrrohr auf, welches zur Eindüsung eines flüssigen Brennstoffs, insbesondere Öl, in den Ringkanal vorgesehen ist. Bevorzugt ist das Brennstoffzufuhrrohr ein Ölzufuhrrohr. Dieses weist zumindest eine Dehschleife auf. Zudem weist der mindestens eine, elastisch ausgeführte Gaszufuhrkanal einen Querschnitt auf, der größer als der Querschnitt des Ölzufuhrrohrs ist. Damit wird der erforderliche Massenstrom aufgenommen. Zudem werden die Strömungsquerschnitte ausgenutzt, um unnötige Druckverluste zu vermeiden.

Bevorzugt ist ein solcher Brenner in einer Gasturbine vorgesehen.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren. Darin zeigen
- FIG 1: den erfindungsgemäßen Brenner in einer stark sche- matisierten Prinzipskizze,
- FIG 2: eine Prinzipdarstellung einer Brennkammer-Nabe mit zwei Gasstufen und einem Ölkanal,
- FIG 3: eine Prinzipdarstellung einer Drallschaufel mit zwei Gasstufen,
- FIG 4: ein Ausführungsbeispiel eines erfindungsgemäßen Brenners mit erfindungsgemäßen Gaszuführkanälen,
- FIG 5: eine Draufsicht auf einen Erfindungsgemäßen Brenner mit einem im Zentrum angeordneten Pilotbrenner,
- FIG 6: zeigt die Gaszufuhrkanäle sowie den Ölzufuhrkanal des erfindungsgemäßen Brenners,
- FIG 7: den erfindungsgemäßen Brenner mit einer geteilten Schaufel.

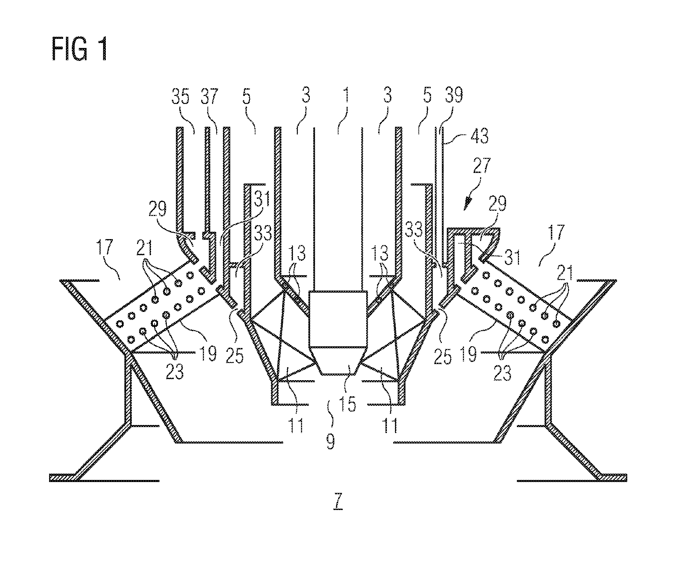

Nachfolgend wird mit Bezug auf Figur 1, die einen erfindungsgemäßen Brenner in einer stark schematisierten Prinzipskizze zeigt, das dem Brenner zugrunde liegende Konzept beschrieben.

Der erfindungsgemäße Brenner, der ggf. in Verbindung mit mehreren gleichartigen Brennern beispielsweise in der Brennkammer einer Gasturbinenanlage eingesetzt werden kann, umfasst ein inneres Pilotbrennersystem und ein das Pilotbrennersystem konzentrisch umgebendes Hauptbrennersystem. Sowohl Pilotbrennersystem als auch Hauptbrennersystem können wahlweise mit gasförmigen und/oder flüssigen Brennstoffen, wie bspw. Erdgas oder Heizöl, betrieben werden.

Das Pilotbrennersystem umfasst einen inneren Ölzufuhrkanal 1, der von einem inneren ringförmigen Gaszufuhrkanal 3 konzentrisch umgeben ist. Dieser ist wiederum von einem inneren Luftzufuhrkanal oder Inertstoffzufuhrkanal 5 konzentrisch umgeben. In oder an diesem Luftzufuhrkanal kann zudem ein geeignetes Zündsystem angeordnet sein (in der Figur nicht dargestellt). Das Pilotbrennersystem weist eine einer Brennkammer 7 zuzuwendende Austrittsöffnung 9 auf, in deren Bereich eine Drallbeschaufelung 11 im Luftzufuhrkanal angeordnet ist. Mittels Düsenöffnungen 13 kann Gas aus dem inneren Gaszufuhrkanal 3 im Bereich der Drallbeschaufelung oder stromauf der Drallbeschaufelung in den Luftzufuhrkanal 5 eingedüst werden. Öl aus dem Ölzufuhrkanal kann mittels Öldüsen 15 stromab der Drallbeschaufelung in die zugeführte Luft bzw. den zugeführten Inertstoff eingedüst werden.

Das Pilotbrennersystem kann in an sich bekannter Weise mit Öl und/oder Gas als Diffusionsbrenner betrieben werden, in dem der Brennstoff direkt in die Flamme eingedüst wird. Es besteht aber auch die Möglichkeit, das Pilotbrennersystem als Vormischbrenner zu betreiben, in dem der Brennstoff gründlich mit Luft vermischt wird, bevor das Gemisch der Flamme zugeführt wird.

Das das Pilotbrennersystem umgebende Hauptbrennersystem umfasst einen radialen äußeren Luftzufuhrkanal 17, auch Ringluftkanal genannt, durch den sich mehrere Drallschaufeln 19 einer Drallbeschaufelung erstrecken. Diese Drallschaufeln 19 weisen erste Gasdüsen 21 und zweite Gasdüsen 23 auf, durch die Brenngas in die durch den radialen Luftzufuhrkanal 17 einströmende Luft eingedüst werden kann. In die durch den Luftzufuhrkanal 17 strömende Luft kann mittels Öldüsen 25 zudem Öl eingedüst werden. Zwar ist im vorliegenden Ausführungsbeispiel von Öl und Öldüsen die Rede, jedoch soll dies lediglich stellvertretend für geeignete flüssige Brennstoffe und entsprechende Düsen stehen.

Die in den Drallschaufeln 19 befindlichen ersten Gasdüsen 21 und zweiten Gasdüsen 23 sowie die Öldüsen 25 werden über eine radial innen liegende Brennstoffzufuhranordnung, die sogenannte Nabe 27, mit Brennstoff versorgt. In dieser sind erste und zweite ringförmige Gasverteilerkanäle 29 und 31 angeordnet, die die Gasdüsen 21 bzw. 23 mit Gas versorgen. Die Drallschaufeln 19 und die Brennstoffzufuhranordnung weisen eine Brennstoff-Strömungsrichtung auf. Weiterhin ist in der Nabe 27 ein ringförmiger Ölverteilerkanal 33 angeordnet, der die Öldüsen 25 mit Öl versorgt. Die Gasverteilerkanäle 29, 31 sowie der Ölverteilerkanal 33 werden über Gaszufuhrkanäle 35, 37 bzw. über einen Ölzufuhrkanal 39 mit dem entsprechenden Brennstoff versorgt. Die Gaszufuhrkanäle 35, 37 versorgen die Gasverteilerkanäle 29, 31 mit Brennstoff. Für den Ölzufuhrkanal 39 liegt ein eigenes Ölzufuhrrohr 43 vor.

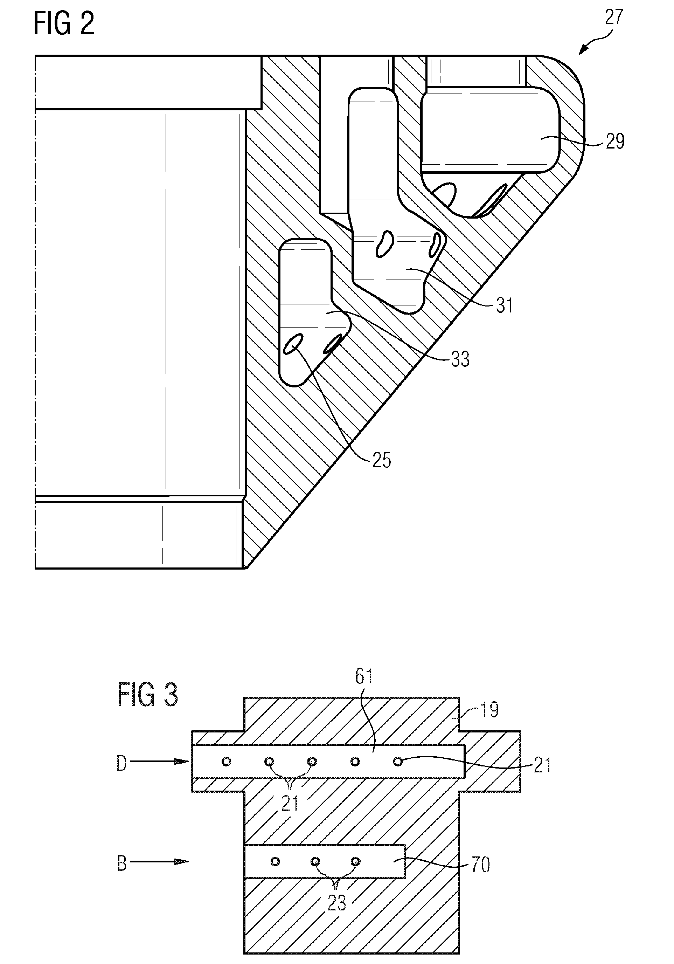

Figur 2 zeigt eine Brennstoff-Nabe 27 mit den Brennstoffverteilerkanal 29 und 31 mit Öffnungen, welche den Brennstoff in die Schaufel 19 führt. Die beiden Brennstoffverteilerkanale 29 und 31 sind im Wesentlichen parallel angeordnet.

Figur 3 zeigt eine Prinzipdarstellung einer Drallschaufel 7 mit zwei integrierten, unabhängig voneinander ansteuerbaren Gasstufen B und D.

Die Drallschaufel 19 weist zwei voneinander unabhängige Gasverteilerkanäle 29 und 31 auf. Der eine Gasverteilerkanal 29 mit den Auslassdüsen 21 kann beispielsweise zum Eindüsen eines anderen des Mediums D als der zweite Gasverteilerkanäle 31 über die Auslassdüsen 23 (Medium B) verwendet werden. Vorzugsweise werden beide durch die Gasverteilerkanäle 29 und 31 der Drallschaufel 19 einzudüsenden Medien gasförmig sein, z. B. das Eine Erdgas und das Andere Kohlegas. Ebenso kann über diese Auslassdüsen 21 und/oder 23 bei Bedarf ein Inertstoff wie etwa Wasserdampf eingedüst werden.

Erfindungsgemäß wurde erkannt, dass, wenn die beiden die Gasverteilerkanäle 29 und 31 mittels zweier paralleler Gaszufuhrkanäle, welche als Gaszufuhrrohre ausgeführt sind, versorgt werden, durch die damit verbundene starke Veränderung der Nabenaußenkontur extreme Nachteile und negative Einflüsse auf das Strömungsverhalten zu erwarten sind. Aufgrund der notwendigen Doppeleinspannung treten sehr hohe Spannungen auf, so dass die geforderten Lebensdauern nicht erreicht werden. Die beiden eingespannten Gaszufuhrrohre beeinflussen sich gegenseitig negativ.

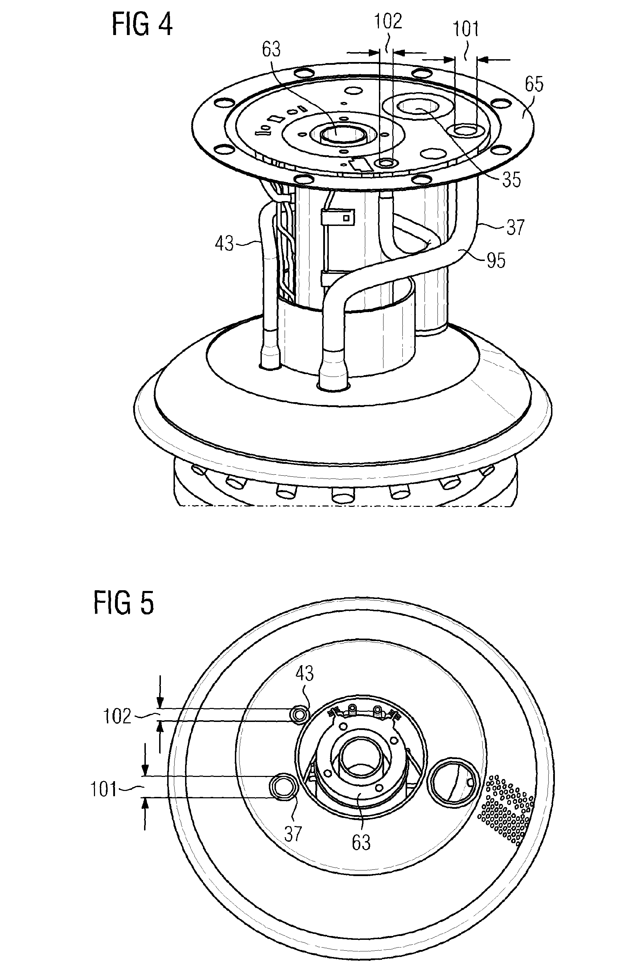

Dies wird mit Hilfe der Erfindung nun vermieden. FIG 4 zeigt ein Ausführungsbeispiel eines Brenners mit erfindungsgemäßen Gaszuführkanälen 35 und 37. Erfindungsgemäß ist nun der Gaszufuhrkanal 37 als elastisches Rohr ausgeführt. Der Gaszufuhrkanal 35 ist als tragendes Gasvormischrohr ausgebildet. Selbstverständlich können auch der Gaszufuhrkanal 37 als tragendes Vormischrohr und der Gaszufuhrkanal 35 als elastisches Rohr ausgebildet sein. Durch die elastische Ausführung mindestens einer der Gaszufuhrkanäle können thermische Dehnungen besonders gut ausglichen werden.

Die Ausführung des Gaszufuhrkanals 37 als elastisches Rohr hat dabei den Vorteil, dass die Aerodynamik des Brenners im Hinblick auf die in die Luftzufuhrkanäle 5, 17 einströmenden Luft im Vergleich zu einem Brenner mit lediglich einem einzigen Gaszufuhrkanal und einem einzigen Satz Gasdüsen nicht verändert wird. Der erfindungsgemäße Brenner kann daher in bestehenden Verbrennungssystemen an die Stelle bisheriger Brenner treten, ohne dass sich dadurch die Aerodynamik des Verbrennungssystems ändert.

Weiterhin ermöglicht die Ausgestaltung eine robuste Konstruktion, die zudem ein einfaches Montieren ermöglicht. Da der als elastisches Rohr ausgebildet Gaszufuhrkanal 37 die thermischen Spannungen wesentlich reduziert (spannungsarmes Design) wird durch eine zusätzliche zweite Gasstufe in der Schaufel 19 die Lebensdauer nicht verringert. Hier kann auch durch die Reduktion der thermischen Spannungen die Lebensdauer der Brenner-Nabe 27 bzw. des gesamten Brenners erhöht werden.

Der als elastisches Rohr ausgebildet Gaszufuhrkanal 37 kann dabei aus einem elastischen Werkstoff gefertigt sein, um die Elastizität herzustellen.

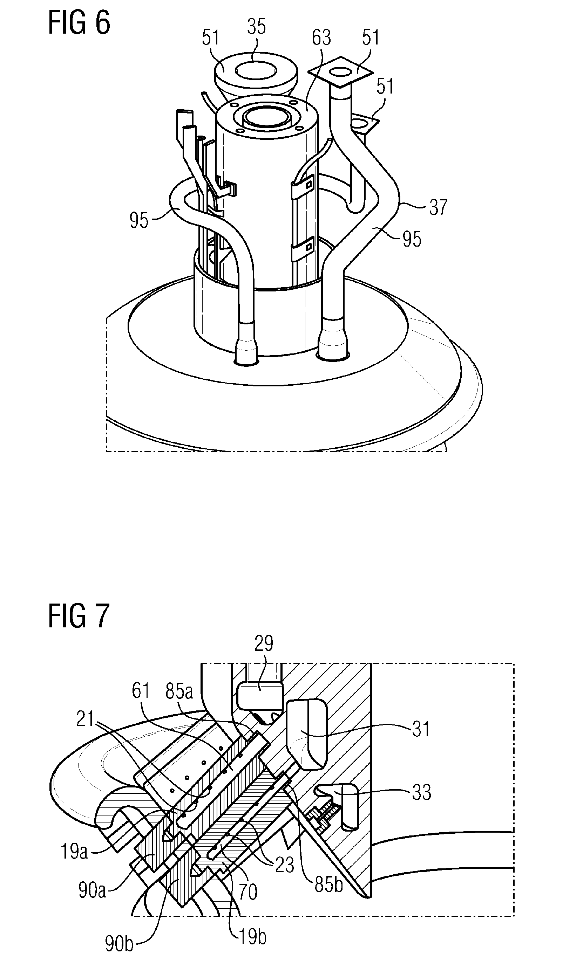

Alternativ oder zusätzlich kann der mindestens eine als elastisches Rohr ausgebildet Gaszufuhrkanal 37 mindestens eine Dehnschleife 95 aufweist, um die Elastizität herzustellen. Wie FIG 5 und FIG 6 zeigt kann sich diese mindestens eine Dehnschleife 95 um den Pilotbrenner 63 winden.

Somit können die thermischen Dehnungen, welche im Betrieb des Brenners entstehen, besonders gut ausgeglichen werden, wobei gleichzeitig eine besonders gute und robuste Konstruktion der beiden Gaszufuhrkanäle 35, 37 vorliegt. Auf diese Weise kann zudem die Strömung aus den Gaszufuhrkanälen 37,35 in die jeweiligen ringförmigen Gasverteilerkanäle 29,31 optimiert werden, wodurch gleichmäßigere Wärmeübergangszahlen erreichbar sind und die Lebensdauer sowie die Lebensdauervoraussage des Brenners verbessert werden kann.

Im Betrieb weist der Brenner eine Brennstoff Strömungsrichtung sowie einen Brennerträger 65 auf. Der Brennerträger 65 weist zudem heißgasseitig Brennerträgerflansche 51 auf. FIG 5 und FIG 6 zeigt die Gaszufuhrkanäle 35,37 sowie den Ölzufuhrkanal 43 des erfindungsgemäßen Brenners mit einem in ihrem Zentrum angeordneten Pilotbrenner 63 sowie die Brennerträgerflansche 51 der Anschlüsse der einzelnen Gas bzw. Ölkanäle. Die Verteilung der Anschlüsse der Gaszufuhrkanälen 37 und 35 als auch des Ölzufuhrrohrs 43 erfolgt auf der heißen Seite des Brennerträgers 65 am Brennerträgerflansch 51. Dies ermöglicht eine einfache Montage aller dreier aber insbesondere des zusätzlichen als elastisches Rohr ausgebildet Gaszufuhrkanals 37.

Der Brennerträger 65 bzw. der Brennerträgerflansch 51 und die Brenner-Nabe 27 sind nun quasi mit drei "Versorgungsbohrungen" ausgestaltet.

Bevorzugt ist das Ölzufuhrrohr 43 ebenfalls elastisch, dass heißt, bevorzugt mit Dehnschleifen 95 ausgeführt. Außerdem können mit Hilfe unterschiedlicher Querschnitte der Gaszufuhrkanäle und des Ölzufuhrkanals die Strömungsquerschnitte optimal ausgenutzt werden, wodurch unnötige Druckverluste vermieden werden. Der Querschnitt 101 des mindestens eines als elastisches Rohr ausgebildet Gaszufuhrkanals 37 ist dabei größer ausgeführt als der Querschnitt 102 des Ölzufuhrkanals 43 um den erforderlichen Massenstrom des Gases aufnehmen zu können (FIG 5). Somit können mit Hilfe der optimalen Ausnutzung und Anpassung der Strömungsquerschnitte unnötige Druckverluste vermieden werden.

Bevorzugt wird ein solcher erfindungsgemäßer Brenner 27 im Zusammenhang mit einer geteilten Drallschaufel 19 eingesetzt. Diese umfasst die erste Brennstoffeindüsung 21, die von einem ersten Verteilerrohr 61 gespeist wird, sowie die zweiten Brennstoffeindüsung 23, welche von einem zweiten Verteilerrohr 70 gespeist wird. Dabei ist das Verteilerrohr 61,70 in der Drallschaufel 19 integriert. Die geteilte Drallschaufel 19 ist nun zwischen dem ersten und zweiten Verteilerrohr 61 und 70 geteilt in zwei Schaufelhälften 19a,19b ausgeführt. Hierdurch kann noch verbessert die Spannung aus der Nabe 27 gezogen werden, und gleichmäßig über dem Bauteil verteilt werden. Die Schaufelhälften 19a, 19b weisen zudem stromabwärts einen Passzapfen 90a, 90b und stromaufwärts einen Schiebesitz 85a,85b auf, der sozusagen in der Nabe 27 selber angebracht wird. Durch die Passzapfen 90a, 90b und den Schiebesitz 85a,85b sind die beiden Schaufelhälften 19a,19b nun thermisch separat dehnbar, wodurch ebenfalls Spannungen reduziert werden.

## Patentansprüche

1. Brenner mit einer zentralen Brennstoffzufuhranordnung (27), einem die zentrale Brennstoffzufuhranordnung (27) umgebenden Ringluftkanal (17) zur Zufuhr von Verbrennungsluft und in dem Ringluftkanal (17) angeordneten Drallschaufeln (19), welche erste Gasdüsen (21) zum Eindüsen eines gasförmigen Brennstoffes in die Verbrennungsluft und zweite Gasdüsen (23) zum Eindüsen eines gasförmigen Brennstoffes in die Verbrennungsluft aufweisen, wobei die ersten Gasdüsen (21) von einem ersten Gasverteilerkanal (29) in der Brennstoffzufuhranordnung (27) gespeist werden und die zweiten Gasdüsen (23) von einem zweiten Gasverteilerkanal (31) in der Brennstoffzufuhranordnung (27) gespeist werden, und wobei ein erster Gaszufuhrkanal (35) und ein zweiter Gaszufuhrkanal (37) zur Versorgung mit Brenngas vorhanden ist, wobei der erste Gaszufuhrkanal (35) mit dem ersten Gasverteilerkanal (29) verbunden ist und der zweite Gaszufuhrkanal (37) mit dem zweiten Gasverteilerkanal (31) verbunden ist
**dadurch gekennzeichnet, dass** mindestens einer der Gaszufuhrkanäle (35,37) elastisch ausgeführt ist.

2. Brenner nach Anspruch 1
**dadurch gekennzeichnet, dass** der mindestens eine Gaszufuhrkanal (35,37) aus einem elastischen Werkstoff gefertigt ist, um die Elastizität herzustellen.

3. Brenner nach einem der vorhergehenden Ansprüche
**dadurch gekennzeichnet, dass** ein Pilotbrenner (63) vorhanden ist.

4. Brenner nach einem der vorhergehenden Ansprüche,
**dadurch gekennzeichnet, dass** der mindestens eine Gaszufuhrkanal (35,37) mindestens eine Dehnschleife (95) aufweist, um die Elastizität herzustellen.

5. Brenner nach Anspruch 3 und 4,
**dadurch gekennzeichnet, dass** die mindestens eine Dehnschleife (95) um den Pilotbrenner (63) angeordnet ist.

6. Brenner nach einem der vorhergehenden Ansprüche,
**dadurch gekennzeichnet, dass** der Brenner im Betrieb eine Brennstoff Strömungsrichtung aufweist, und ein Brennerträger (65) vorhanden ist, und die Gaszufuhrkanäle (35,37) stromaufwärts heißgasseitig mit dem Brennerträger (65) verbunden sind.

7. Brenner nach einem der vorhergehenden Ansprüche,
**dadurch gekennzeichnet, dass** der Brenner im Betrieb eine Brennstoff Strömungsrichtung aufweist, und die Gaszufuhrkanäle (35,37) stromabwärts mit einer Drallschaufel (19) verbunden sind.

8. Brenner nach Anspruch 7,
**dadurch gekennzeichnet, dass** die Drallschaufel (19) die ersten Düsen (21) von einem ersten Verteilerrohr (61) gespeist werden und die zweiten Düsen (23) von einem zweiten Verteilerrohr (70), wobei das Verteilerrohr (61,70) in der Drallschaufel (19) integriert ist, und wobei die Drallschaufel (19) zwischen den ersten Verteilerrohr (61) und zweiten Verteilerrohr (70) geteilt in zwei Schaufelhälften (19a,19b) ausgeführt ist.

9. Brenner nach einem der vorhergehenden Ansprüche,
**dadurch gekennzeichnet, dass** die Brennstoffzufuhranordnung (27) ein weiteres Brennstoffzufuhrrohr aufweist, welches zur Eindüsung eines flüssigen Brennstoffs, insbesondere Öl, in den Ringkanal (27) vorgesehen ist.

10. Brenner nach Anspruch 9,
**dadurch gekennzeichnet, dass** das Brennstoffzufuhrrohr ein Ölzufuhrrohr (43) ist und zumindest eine Dehnschleife (95) aufweist.

11. Gasturbine mit wenigstens einem Brenner nach einem der vorhergehenden Ansprüche.
